# EUROPEAN PATENT APPLICATION

(11) **EP 4 783 278 A1**
(43) Date of publication of application: **29.07.2026**
(21) Application number: 25226938.6
(22) Date of filing: 23.12.2025
(51) Int. Cl.: H01M 10/04, H01M 50/103, H01M 50/117, H01M 50/474, H01M 50/48, H01M 50/586, H01M 50/593

(54) **METHOD OF MANUFACTURING SECONDARY BATTERY**

(30) Priority: 27.01.2025 JP 2025011568
(71) Applicant: Prime Planet Energy & Solutions, Inc., Chuo-ku, Tokyo 103-0022 (JP)
(72) Inventor: NAKASHIMA, Yuji, Tokyo,, 103-0022 (JP)
(74) Representative: Kuhnen & Wacker Patent- und Rechtsanwaltsbüro PartG mbB

(57) **Abstract**

In a method of manufacturing a secondary battery, inserting an electrode assembly (200) into an exterior container (100) includes a first stage of inserting, into the exterior container (100), a portion of the electrode assembly (200) corresponding to a length of 2/3 or more of a main body portion (2000) of the electrode assembly (200) in a direction of a long side (2100) while grasping the electrode assembly (200), and a second stage of inserting, into the exterior container (100), a remainder of the electrode assembly (200) in the direction of the long side (2100) after the first stage, and at least in the second stage, the exterior container (100) and the electrode assembly (200) are disposed such that the direction of the long side (2100) is oriented in a vertical direction and the electrode assembly is inserted vertically downward.

## Description

### CROSS REFERENCE TO RELATED APPLICATIONS

This nonprovisional application is based on Japanese Patent Application No. 2025-011568 filed on January 27, 2025 with the Japan Patent Office, the entire contents of which are hereby incorporated by reference.

### BACKGROUND OF THE INVENTION

### Field of the Invention

The present technology relates to a method of manufacturing a secondary battery.

### Description of the Background Art

A method of inserting an electrode assembly of a secondary battery into an exterior container is described in, for example, Japanese Patent Laying-Open No. 2003-346902.

### SUMMARY OF THE INVENTION

It is required to smoothly insert the electrode assembly so as to suppress occurrence of unintended deformation and occurrence of deviation between electrode plates in a step of inserting the electrode assembly. From this viewpoint, there is still room for improvement in the conventional method of manufacturing a secondary battery.

An object of the present technology is to provide a method of manufacturing a secondary battery so as to suppress occurrence of unintended deformation and occurrence of deviation between electrode plates in a step of inserting an electrode assembly.

The present technology provides the following method of manufacturing a secondary battery.
[1] A method of manufacturing a secondary battery, the method comprising: preparing an exterior container having a prismatic shape and provided with a first opening; preparing an electrode assembly including a positive electrode and a negative electrode stacked in a first direction, the electrode assembly having a main body portion having a substantially rectangular shape including a long side and a short side when viewed in a first direction; and inserting the electrode assembly into the exterior container through the first opening along a direction of the long side, wherein the inserting the electrode assembly into the exterior container includes a first stage of inserting, into the exterior container, a portion of the electrode assembly corresponding to a length of 2/3 or more of the main body portion in the direction of the long side while grasping the electrode assembly, and a second stage of inserting, into the exterior container, a remainder of the electrode assembly in the direction of the long side after the first stage, and at least in the second stage, the exterior container and the electrode assembly are disposed such that the direction of the long side is oriented in a vertical direction and the electrode assembly is inserted vertically downward.
[2] The method of manufacturing the secondary battery according to [1], wherein the exterior container is provided with a second opening provided opposite to the first opening, and in the second stage, while supporting the electrode assembly by a jig inserted into the exterior container through the second opening, the electrode assembly is inserted into the exterior container by moving the jig vertically downward.
[3] The method of manufacturing the secondary battery according to [1] or [2], wherein the long side has a first length, the short side has a second length, and the first length is three times or more as large as the second length.
[4] The method of manufacturing the secondary battery according to any one of [1] to [3], wherein a length of the long side is 300 mm or more.
[5] The method of manufacturing the secondary battery according to any one of [1] to [4], further comprising providing a spacer having an insulating property at an end portion of the electrode assembly in the direction of the long side, wherein the electrode assembly is inserted into the exterior container together with the spacer.
[6] The method of manufacturing the secondary battery according to [5], further comprising: providing a sheet member having an insulating property and covering at least a portion of the electrode assembly; and joining the sheet member and the spacer.
[7] The method of manufacturing the secondary battery according to any one of [1] to [5], further comprising providing a sheet member having an insulating property and covering at least a portion of the electrode assembly, wherein the electrode assembly is inserted into the exterior container together with the sheet member.
[8] The method of manufacturing the secondary battery according to [6] or [7], wherein in the inserting the electrode assembly into the exterior container, a clearance between the sheet member and the exterior container is more than 0 and 0.6 mm or less.
[9] The method of manufacturing the secondary battery according to any one of [1] to [8], further comprising sealing the first opening by a sealing plate.
[10] The method of manufacturing the secondary battery according to [9], wherein in the sealing the first opening, control of a position or direction of the sealing plate based on a magnitude of reaction to the sealing plate is performed.
[11] The method of manufacturing the secondary battery according to [9] or [10], wherein in the sealing the first opening, a clearance between the sealing plate and the exterior container is more than 0 and 0.1 mm or less.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a front view showing a configuration of a secondary battery according to an embodiment.
Fig. 2 is a diagram showing a state in which the secondary battery shown in Fig. 1 is viewed in a direction of arrow II.
Fig. 3 is a diagram showing a state in which the secondary battery shown in Fig. 1 is viewed in a direction of arrow III.
Fig. 4 is a diagram showing a state in which the secondary battery shown in Fig. 1 is viewed in a direction of arrow IV.
Fig. 5 is a diagram showing a state in which the secondary battery shown in Fig. 1 is viewed in a direction of arrow V.
Fig. 6 is a front cross sectional view of the secondary battery shown in Fig. 1.
Fig. 7 is a cross sectional view of a negative electrode plate.
Fig. 8 is a front view showing the negative electrode plate.
Fig. 9 is a cross sectional view of a positive electrode plate.
Fig. 10 is a front view showing the positive electrode plate.
Fig. 11 is a cross sectional view of the secondary battery shown in Fig. 1 along XI-XI.
Fig. 12 is a cross sectional view of the secondary battery shown in Fig. 1 along XII-XII.
Fig. 13 is a flowchart showing a method of manufacturing the secondary battery according to one embodiment.
Fig. 14 is a perspective view showing a state before two electrode assemblies included in the secondary battery according to one embodiment are overlapped with each other.
Fig. 15 is a cross sectional view of each of electrode assemblies and current collectors shown in Fig. 14 along XV-XV.
Fig. 16 is a perspective view showing a state of attaching a holder and a spacer to an electrode assembly.
Fig. 17 is a perspective view showing a state of attaching a sealing plate to the current collectors on the negative electrode side.
Fig. 18 is a cross sectional view of each of the electrode assemblies and the current collectors shown in Fig. 17 along XVIII-XVIII.
Fig. 19 is a perspective view showing a state of attaching a sealing plate to the current collector on the positive electrode side.
Fig. 20 is a perspective view showing the configuration of the secondary battery.
Fig. 21 is a diagram schematically showing a shape of the electrode assembly.
Fig. 22 is a diagram showing a configuration of a jig used in a step of inserting the electrode assembly.
Fig. 23 is a diagram showing a periphery of a lower end portion of the electrode assembly in a first stage of the insertion step.
Fig. 24 is a diagram showing a periphery of an upper end portion of the electrode assembly in the first stage of the insertion step.
Fig. 25 is a diagram showing the periphery of the lower end portion of the electrode assembly in a second stage of the insertion step.
Fig. 26 is a diagram showing the periphery of the upper end portion of the electrode assembly in the second stage of the insertion step.
Fig. 27 is a diagram showing the periphery of the upper end portion of the electrode assembly in a sealing step using the sealing plate.

### DESCRIPTION OF THE PREFERRED EMBODIMENTS

Hereinafter, embodiments of the present technology will be described. It should be noted that the same or corresponding portions are denoted by the same reference characters, and may not be described repeatedly.

It should be noted that in the embodiments described below, when reference is made to number, amount, and the like, the scope of the present technology is not necessarily limited to the number, amount, and the like unless otherwise stated particularly. Further, in the embodiments described below, each component is not necessarily essential to the present technology unless otherwise stated particularly. Further, the present technology is not limited to one that necessarily exhibits all the functions and effects stated in the present embodiment.

It should be noted that in the present specification, the terms "comprise", "include", and "have" are open-end terms. That is, when a certain configuration is included, a configuration other than the foregoing configuration may or may not be included.

Also, in the present specification, when geometric terms and terms representing positional/directional relations are used, for example, when terms such as "parallel", "orthogonal", "obliquely at 45°", "coaxial", and "along" are used, these terms permit manufacturing errors or slight fluctuations. In the present specification, when terms representing relative positional relations such as "upper side" and "lower side" are used, each of these terms is used to indicate a relative positional relation in one state, and the relative positional relation may be reversed or turned at any angle in accordance with an installation direction of each mechanism (for example, the entire mechanism is reversed upside down).

Moreover, sizes such as width, length, and diameter of each member illustrated in the present specification are not limited to those shown in the figures, and can be appropriately changed. In the present specification, ordinal numbers such as "first" and "second" may be given to respective configurations, but these ordinal numbers do not limit priority, order, or the like unless explicitly defined.

In the present specification, the term "battery" is not limited to a lithium ion battery, and may include other batteries such as a nickel-metal hydride battery and a sodium-ion battery. In the present specification, the term "electrode" may collectively represent a positive electrode and a negative electrode. Further, the term "electrode plate" may collectively represent a positive electrode plate and a negative electrode plate.

In the present specification, the "battery" can be mounted on vehicles such as a hybrid electric vehicle (HEV), a plug-in hybrid electric vehicle (PHEV), and a battery electric vehicle (BEV). It should be noted that the use of the "battery" is not limited to the use in a vehicle.

In the present specification, the X direction may be referred to as a "width direction" of each of the secondary battery, the electrode assembly, and the case main body, the Z direction may be referred to as a "height direction" of the secondary battery, the electrode assembly, and the case main body, and the Y direction may be referred to as a "thickness direction" of the secondary battery, the electrode assembly, and the case main body.

### (Overall Configuration of Secondary Battery)

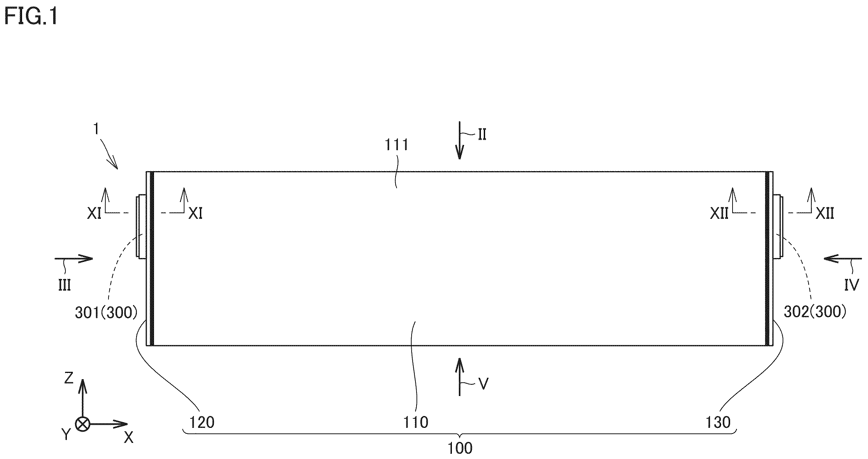

The overall configuration of a secondary battery 1 will be described with reference to Figs. 1 to 6. Secondary battery 1 includes a case 100 (exterior container), an electrode assembly 200, electrode terminals 300, and current collectors 400. Case 100 includes a case main body 110, a sealing plate 120, and a sealing plate 130.

When forming a battery assembly including secondary battery 1, a plurality of secondary batteries 1 are stacked in the thickness direction of each of the plurality of secondary batteries 1. Secondary batteries 1 stacked may be restrained in the stacking direction (Y direction) by a restraint member to form a battery module, or the battery assembly may be directly supported by a side surface of a case of a battery pack without using the restraint member.

Case main body 110 is constituted of a member having a tubular shape, preferably, a prismatic tubular shape. Thus, secondary battery 1 having a prismatic shape is obtained. Case main body 110 is composed of a metal. Specifically, case main body 110 is composed of aluminum, an aluminum alloy, iron, an iron alloy, or the like.

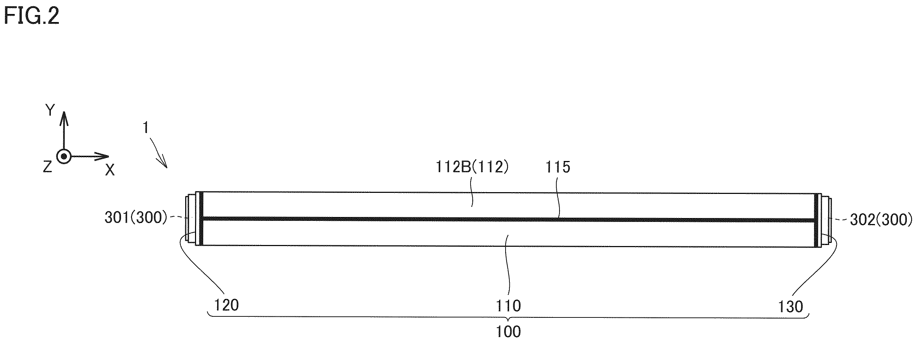

As shown in Figs. 1 and 2, sealing plate 120 and sealing plate 130 are provided at respective end portions of the case main body. Case main body 110 can be formed to have a prismatic tubular shape in, for example, the following manner: end sides of a plate-shaped member having been bent are brought into abutment with each other (joining portion 115 illustrated in Fig. 2) and are joined together (for example, energy ray application such as laser welding is favorable). Each of the corners of the "prismatic tubular shape" may have a shape with a curvature.

In the present embodiment, case main body 110 is formed to be longer in the width direction (X direction) of secondary battery 1 than in each of the thickness direction (Y direction) and the height direction (Z direction) of secondary battery 1. The size (width) of case main body 110 in the X direction is preferably about 300 mm or more, and is more preferably about 350 mm or more. In this way, secondary battery 1 can be formed to have a relatively large size (high capacity). The size (height) of case main body 110 in the Z direction is preferably about 200 mm or less, more preferably about 150 mm or less, and further preferably about 100 mm or less. Thus, (low-height) secondary battery 1 having a relatively low height can be formed, thus resulting in improved ease of mounting on a vehicle, for example.

Case main body 110 includes a pair of first side surface portions 111 and a pair of second side surface portions 112. The pair of first side surface portions 111 constitute parts of the side surfaces of case 100. The pair of second side surface portions 112 constitute the bottom surface portion and upper surface portion of case 100. The pair of first side surface portions 111 and the pair of second side surface portions 112 are provided to intersect each other. The pair of first side surface portions 111 and the pair of second side surface portions 112 are connected at their respective end portions. Each of the pair of first side surface portions 111 desirably has an area larger than that of each of the pair of second side surface portions 112.

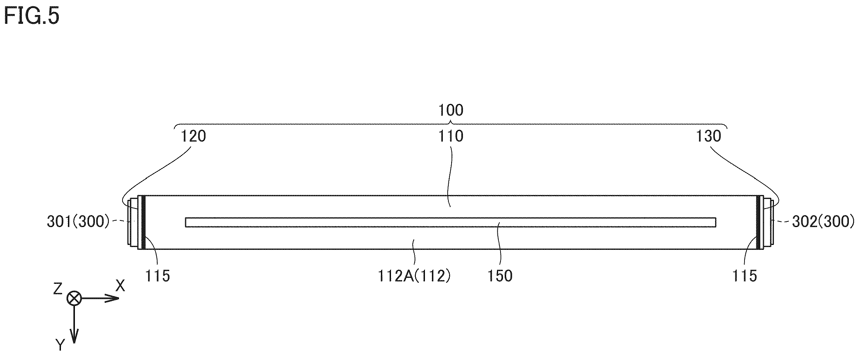

As shown in Fig. 5, a gas-discharge valve 150 is provided in one second side surface portion 112A of the pair of second side surface portions 112. Gas-discharge valve 150 extends in the width direction (X direction) of secondary battery 1. Gas-discharge valve 150 extends from the center of case main body 110 in the X direction to such an extent that gas-discharge valve 150 does not reach both ends of case main body 110 in the X direction. The shape of gas-discharge valve 150 can be changed appropriately.

The thickness of the plate-shaped member in gas-discharge valve 150 is thinner than the thickness of the plate-shaped member of case main body 110 other than gas-discharge valve 150. Thus, when the pressure in case 100 becomes equal to or more than a predetermined value, gas-discharge valve 150 is fractured prior to the other portions of case main body 110, thereby discharging the gas in case 100 to the outside.

As shown in Fig. 2, joining portion 115 is formed at the other second side surface portion 112B of the pair of second side surface portions 112. Joining portion 115 extends in the width direction (X direction) of secondary battery 1. At joining portion 115, the end sides of the plate-shaped member constituting case main body 110 are joined to each other.

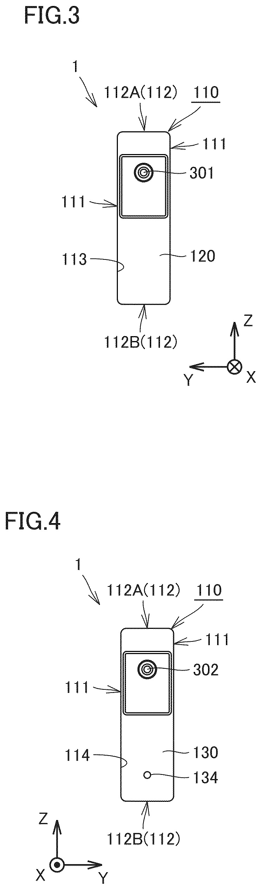

As shown in Fig. 3, an opening 113 (first opening) is provided at an end portion of case main body 110 on one side in the first direction (X direction). Opening 113 is sealed by sealing plate 120. Joining portion 115 is formed at opening 113 so as to seal opening 113. Each of opening 113 and sealing plate 120 has a substantially rectangular shape in which the Y direction corresponds to its short-side direction and the Z direction corresponds to its long-side direction. The substantially rectangular shape includes a rectangular shape or a generally rectangular shape such as a rectangular shape having corners each with a curvature.

A negative electrode terminal 301 is provided on sealing plate 120. The position of negative electrode terminal 301 can be appropriately changed.

As shown in Fig. 4, an opening 114 (second opening) is provided at an end portion of case main body 110 on the other side in the X direction. That is, opening 114 is located at an end portion opposite to opening 113, and openings 113 and 114 face each other. Opening 114 is sealed by sealing plate 130. Joining portion 115 is formed at opening 114 so as to seal opening 114. Each of opening 114 and sealing plate 130 has a substantially rectangular shape in which the Y direction corresponds to its short-side direction and the Z direction corresponds to its long-side direction.

Sealing plate 130 is provided with a positive electrode terminal 302 and an injection hole 134. Injection hole 134 may have a size with which an electrolyte solution can be injected into case 100, and is desirably smaller than a hole used for insertion of positive electrode terminal 302 and provided in sealing plate 130. Injection hole 134 is desirably disposed to be deviated from the center of sealing plate 130 in the Z direction. The positions of positive electrode terminal 302 and injection hole 134 can be appropriately changed.

Each of sealing plate 120 and sealing plate 130 is composed of a metal. Specifically, each of sealing plate 120 and sealing plate 130 is composed of aluminum, an aluminum alloy, iron, an iron alloy, or the like.

Negative electrode terminal 301 is electrically connected to a negative electrode of electrode assembly 200. Negative electrode terminal 301 is attached to sealing plate 120, i.e., case 100.

Positive electrode terminal 302 is electrically connected to a positive electrode of electrode assembly 200. Positive electrode terminal 302 is attached to sealing plate 130, i.e., case 100.

Negative electrode terminal 301 is composed of a conductive material (more specifically, a metal), and can be composed of copper, a copper alloy, or the like, for example. A portion or layer composed of aluminum or an aluminum alloy may be provided at a portion of an outer surface of negative electrode terminal 301.

Positive electrode terminal 302 is composed of a conductive material (more specifically, a metal), and can be composed of aluminum, an aluminum alloy, or the like, for example.

Injection hole 134 is sealed by a sealing member (not shown). As the sealing member, for example, a blind rivet or another metal member can be used.

Electrode assembly 200 is an electrode assembly having a flat shape and having a below-described negative electrode plate and a below-described positive electrode plate stacked on each other. Specifically, electrode assembly 200 is a stacked type electrode assembly in which a plurality of negative electrode plates and a plurality of positive electrode plates are alternately stacked with a separator being interposed therebetween. The separator may be formed by folding a strip-shaped insulating sheet member in a meandering manner, or may be formed by individually providing a plurality of divided insulating sheets. In the present specification, the "electrode assembly" is not limited to the stacked type electrode assembly, and may be a wound type electrode assembly in which a strip-shaped negative electrode plate and a strip-shaped positive electrode plate are wound together with a strip-shaped separator being interposed therebetween. The separator can be constituted of, for example, a microporous membrane composed of polyolefin. When the electrode assembly is the stacked type electrode assembly including the plurality of negative electrode plates and the plurality of positive electrode plates, negative electrode tabs provided on the negative electrode plates may be stacked to form a negative electrode tab group, and positive electrode tabs provided on the positive electrode plates may be stacked to form a positive electrode tab group.

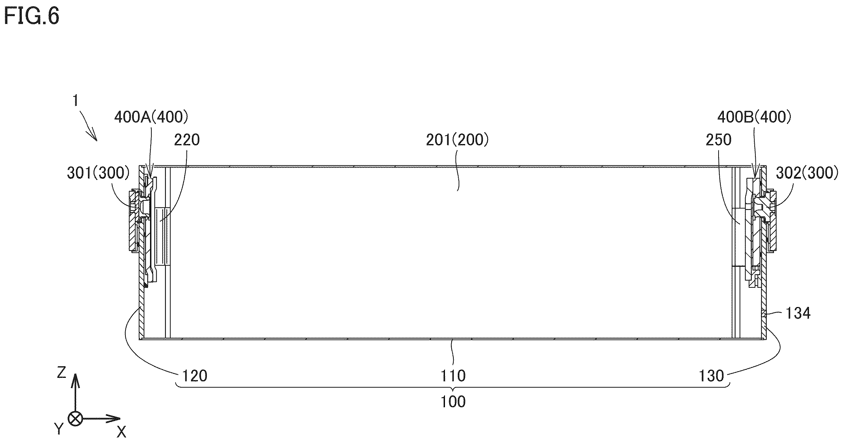

As shown in Fig. 6, case 100 accommodates electrode assembly 200. Fig. 6 illustrates a first electrode assembly 201 described below. First electrode assembly 201 is accommodated in case 100 such that the long-side direction thereof is parallel to the X direction.

Specifically, one or a plurality of the stacked type electrode assemblies and the electrolyte solution (electrolyte) (not shown) are accommodated inside a below-described insulating sheet 700 disposed in case 100. As the electrolyte solution (non-aqueous electrolyte solution), it is possible to use, for example, a solution obtained by dissolving LiPF₆ at a concentration of 1.2 mol/L in a non-aqueous solvent obtained by mixing ethylene carbonate (EC), ethyl methyl carbonate (EMC), and dimethyl carbonate (DMC) at a volume ratio (25°C) of 30:30:40. Instead of the electrolyte solution, a solid electrolyte may be used.

Electrode assembly 200 includes first electrode assembly 201. First electrode assembly 201 includes a main body portion having a substantially rectangular shape, a negative electrode tab group 220, and a positive electrode tab group 250.

The main body portion is constituted of a below-described negative electrode plate 210 and a below-described positive electrode plate 240. Negative electrode tab group 220 is located at an end portion of first electrode assembly 201 on one side (the sealing plate 120 side) with respect to the main body portion thereof in the X direction. Positive electrode tab group 250 is located at an end portion of first electrode assembly 201 on the other side (the sealing plate 130 side) with respect to the main body portion thereof in the X direction.

Each of negative electrode tab group 220 and positive electrode tab group 250 is formed to protrude from a central portion of electrode assembly 200 toward sealing plate 120 or sealing plate 130.

Current collectors 400 include a negative electrode current collector 400A and a positive electrode current collector 400B. Each of negative electrode current collector 400A and positive electrode current collector 400B is constituted of a plate-shaped member. Electrode assembly 200 is electrically connected to negative electrode terminal 301 and positive electrode terminal 302 through current collectors 400.

Negative electrode current collector 400A is disposed on sealing plate 120 with an insulating member composed of a resin being interposed therebetween. Negative electrode current collector 400A is electrically connected to negative electrode tab group 220 and negative electrode terminal 301. Negative electrode current collector 400A is composed of a conductive material (more specifically, a metal), and can be composed of copper, a copper alloy, or the like, for example. Details of negative electrode current collector 400A will be described later.

Positive electrode current collector 400B is disposed on sealing plate 130 with an insulating member composed of a resin being interposed therebetween. Positive electrode current collector 400B is electrically connected to positive electrode tab group 250 and positive electrode terminal 302. Positive electrode current collector 400B is composed of a conductive material (more specifically, a metal), and can be composed of aluminum, an aluminum alloy, or the like, for example. Positive electrode tab group 250 may be electrically connected to sealing plate 130 directly or via positive electrode current collector 400B. In this case, sealing plate 130 may serve as positive electrode terminal 302. Details of positive electrode current collector 400B will be described later.

### (Configuration of Electrode Assembly 200)

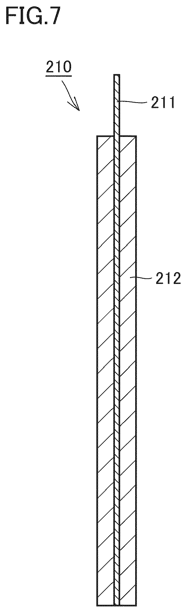

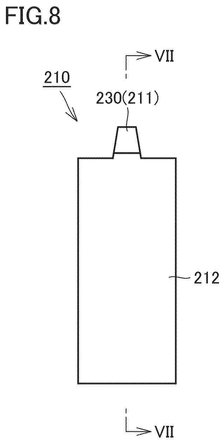

As shown in Figs. 7 and 8, a negative electrode tab 230 constituted of a negative electrode core body 211 is provided at one end portion of negative electrode plate 210 in the width direction. When negative electrode plates 210 are stacked, a plurality of negative electrode tabs 230 are stacked to form negative electrode tab group 220. Negative electrode tab group 220 is electrically connected to the negative electrode. The length of each of negative electrode tabs 230 in the plurality of negative electrode plates 210 in the protruding direction is appropriately adjusted in consideration of the state in which negative electrode tab group 220 is connected to negative electrode current collector 400A. The shape of negative electrode tab 230 is not limited to the one illustrated in Fig. 8.

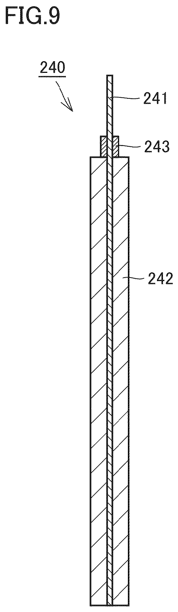

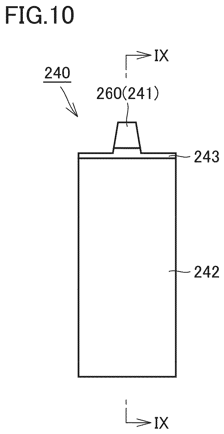

As shown in Figs. 9 and 10, a positive electrode tab 260 constituted of a positive electrode core body 241 is provided at one end portion of positive electrode plate 240 in the width direction. When positive electrode plates 240 are stacked, a plurality of positive electrode tabs 260 are stacked to form positive electrode tab group 250. Positive electrode tab group 250 is electrically connected to the positive electrode. The length of each of positive electrode tabs 260 in the plurality of positive electrode plates 240 in the protruding direction is appropriately adjusted in consideration of the state in which positive electrode tab group 250 is connected to positive electrode current collector 400B. The shape of positive electrode tab 260 is not limited to the one illustrated in Fig. 10.

A positive electrode protective layer 243 is provided at the root of positive electrode tab 260. Positive electrode protective layer 243 may not necessarily be provided at the root of positive electrode tab 260.

In a typical example, the thickness of (one) negative electrode tab 230 is smaller than the thickness of (one) positive electrode tab 260. In this case, the thickness of negative electrode tab group 220 is smaller than the thickness of positive electrode tab group 250.

### (Connection Structure between Electrode Assembly 200 and Current Collector 400)

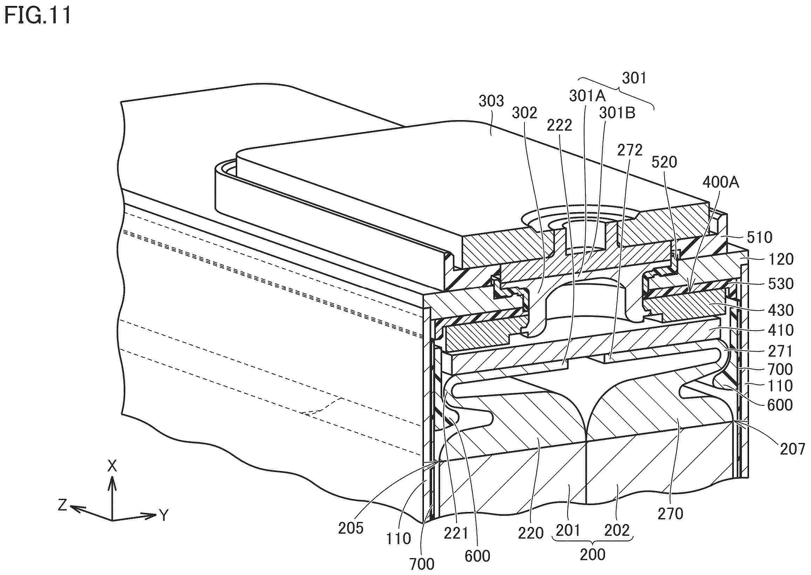

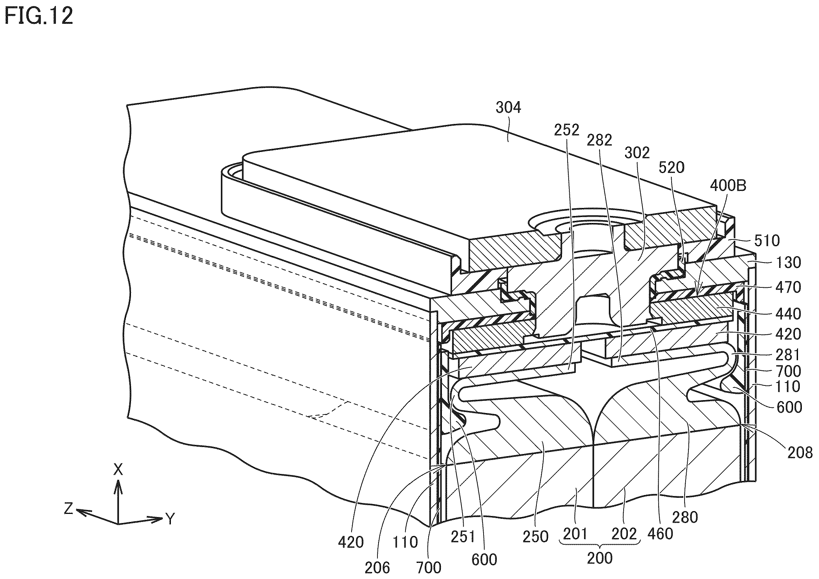

A connection structure between electrode assembly 200 and current collector 400 will be described with reference to Figs. 11 and 12.

As shown in Figs. 11 and 12, electrode assembly 200 includes first electrode assembly 201 and a second electrode assembly 202. Each of first electrode assembly 201 and second electrode assembly 202 includes a positive electrode and a negative electrode. Electrode assembly 200 may be constituted of three or more electrode assemblies.

Electrode assembly 200 is formed by overlapping first electrode assembly 201 and second electrode assembly 202 with each other. First electrode assembly 201 and second electrode assembly 202 are arranged side by side in the thickness direction (Y direction) of each of first electrode assembly 201 and second electrode assembly 202.

As shown in Fig. 11 (connection structure on the negative electrode side), first electrode assembly 201 includes negative electrode tab group 220. Negative electrode tab group 220 is electrically connected to a current collector 410 (negative electrode current collector) at its first end portion 205 in the X direction. Second electrode assembly 202 includes a negative electrode tab group 270. Negative electrode tab group 270 is electrically connected to current collector 410 (negative electrode current collector) at its third end portion 207 in the X direction.

Negative electrode tab group 220 has a curved portion 221 and a tip portion 222. Curved portion 221 is a portion at which negative electrode tab group 220 is curved. Tip portion 222 is a portion of negative electrode tab group 220 located at its end portion.

Negative electrode tab group 270 has a curved portion 271 and a tip portion 272. Curved portion 271 is a portion at which negative electrode tab group 270 is curved. Tip portion 272 is a portion of negative electrode tab group 270 located at its end portion.

Negative electrode tab group 220 and negative electrode tab group 270 are curved in opposite directions such that tip portions 222, 272 are close to each other. Tip portions 222, 272 are separated from each other in the present embodiment; however, it is not limited to this configuration, and tip portions 222, 272 may be in contact with each other.

Negative electrode current collector 400A electrically connects negative electrode terminal 301 to negative electrode tab group 220 and negative electrode tab group 270. Negative electrode current collector 400A in the present embodiment is connected to negative electrode terminal 301 between electrode assembly 200 and sealing plate 120. Negative electrode current collector 400A includes current collector 410 and a current collector 430.

Current collector 410 is a plate-shaped member. Current collector 410 has a long-side direction in the Z direction and a short-side direction in the Y direction. Current collector 410 is constituted of a single component in one piece. Current collector 430 is a plate-shaped member. Current collector 430 has a long-side direction in the Z direction and a short-side direction in the Y direction. Current collector 410 and current collector 430 are arranged side by side in parallel in the X direction. In this way, current collector 410 and current collector 430 are constituted of separate components.

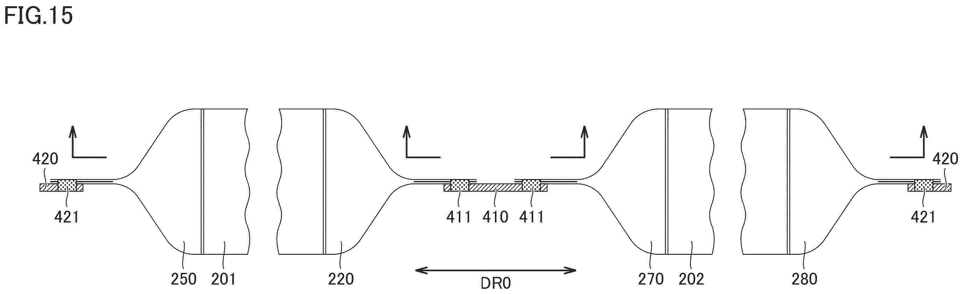

Negative electrode tab groups 220, 270 are joined to current collector 410 at joining locations 411 (see Fig. 15) described later. Each of joining locations 411 can be formed by laser welding or the like, for example.

Current collector 430 is joined to current collector 410 at a joining location located at its end portion in the Z direction. Current collector 430 is connected to negative electrode terminal 301. The connection between current collector 430 and negative electrode terminal 301 can be formed by swaging and/or welding, for example.

Negative electrode terminal 301 is exposed to the outside of sealing plate 120. Negative electrode terminal 301 is connected to a plate-shaped member 303. Negative electrode terminal 301 preferably includes a region 301A composed of copper or a copper alloy and a region 301B composed of aluminum or an aluminum alloy, and region 301A composed of copper or a copper alloy is preferably connected to current collector 430.

Plate-shaped member 303 is located on the outer side with respect to sealing plate 120. Plate-shaped member 303 is disposed along sealing plate 120. Plate-shaped member 303 has electric conductivity. Plate-shaped member 303 is disposed to secure an area of connection with a bus bar or the like that electrically connects secondary battery 1 and another secondary battery adjacent thereto. The connection between negative electrode terminal 301 and plate-shaped member 303 can be formed by, for example, laser welding or the like.

An insulating member 510 is disposed between plate-shaped member 303 and sealing plate 120. An insulating member 520 is disposed between negative electrode terminal 301 and sealing plate 120. An insulating member 530 is disposed between current collector 430 and sealing plate 120.

It should be noted that negative electrode terminal 301 may be electrically connected to sealing plate 120. Sealing plate 120 may function as negative electrode terminal 301.

A spacer 600 is disposed between sealing plate 120 and the main body portion (negative electrode tab groups 220, 270 are not included) of electrode assembly 200. Spacer 600 is composed of a resin member having an insulating property. Spacer 600 suppresses movement of electrode assembly 200 in case 100 in the X direction to suppress damages of negative electrode tab group 220, negative electrode tab group 270, electrode assembly 200, and the like.

As shown in Fig. 12 (connection structure on the positive electrode side), the connection structure between electrode assembly 200 and current collector 400 on the positive electrode side is different from that of the configuration on the negative electrode side in the following point: a portion corresponding to current collector 410 on the negative electrode side is constituted of two components.

First electrode assembly 201 includes positive electrode tab group 250. Positive electrode tab group 250 is electrically connected to a current collector 420 (positive electrode current collector) at its second end portion 206 in the X direction. Second electrode assembly 202 includes a positive electrode tab group 280. Positive electrode tab group 280 is electrically connected to current collector 420 at its fourth end portion 208 in the X direction.

Positive electrode tab group 250 has a curved portion 251 and a tip portion 252. Curved portion 251 is a portion at which positive electrode tab group 250 is curved. Tip portion 252 is a portion of positive electrode tab group 250 located at its end portion.

Positive electrode tab group 280 has a curved portion 281 and a tip portion 282. Curved portion 281 is a portion at which positive electrode tab group 280 is curved. Tip portion 282 is a portion of positive electrode tab group 280 located at its end portion.

Positive electrode tab group 250 and positive electrode tab group 280 are curved in opposite directions such that tip portions 252, 282 are close to each other. Tip portions 252, 272 are separated from each other in the present embodiment; however, it is not limited to this configuration, and tip portions 252, 282 may be in contact with each other.

Positive electrode current collector 400B electrically connects positive electrode terminal 302 to positive electrode tab group 250 and positive electrode tab group 280. Positive electrode current collector 400B in the present embodiment is connected to positive electrode terminal 302 between electrode assembly 200 and sealing plate 130.

Positive electrode current collector 400B includes current collector 420 and a current collector 440. Although an insulating member 460 is interposed between current collector 420 and current collector 440, current collector 420 and current collector 440 are electrically joined to each other at a position different from the cross section shown in the figure.

Current collector 420 is a plate-shaped member. Current collector 420 has a long-side direction in the Z direction and a short-side direction in the Y direction. Current collector 420 is constituted of one current collector and the other current collector. That is, current collector 420 is constituted of two components.

Positive electrode tab group 250 and positive electrode tab group 280 are joined, at below-described joining locations 421 (see Fig. 15), to current collector 420 constituted of the two components. Each of joining locations 421 can be formed by laser welding or the like, for example.

Current collector 440 is joined to current collector 420 at a joining location located at its end portion in the Z direction. Current collector 440 is connected to positive electrode terminal 302. The connection between current collector 440 and positive electrode terminal 302 may be formed by swaging and/or welding, for example.

Positive electrode terminal 302 is provided to be exposed to the outside of sealing plate 130 and reach current collector 440 of positive electrode current collector 400B provided on the inner surface side of sealing plate 130. Positive electrode terminal 302 is connected to a plate-shaped member 304.

Plate-shaped member 304 is located on the outer side with respect to sealing plate 130. Plate-shaped member 304 is disposed along sealing plate 130. Plate-shaped member 304 has electric conductivity. Plate-shaped member 304 is disposed to secure an area of connection with a bus bar or the like that electrically connects secondary battery 1 and another secondary battery adjacent thereto. The connection between positive electrode terminal 302 and plate-shaped member 304 can be formed by, for example, laser welding or the like.

An insulating member 510 is disposed between plate-shaped member 304 and sealing plate 130. An insulating member 520 is disposed between positive electrode terminal 302 and sealing plate 130. An insulating member 470 is disposed between current collector 440 and sealing plate 130.

It should be noted that positive electrode terminal 302 may be electrically connected to sealing plate 130. Sealing plate 130 may function as positive electrode terminal 302.

A spacer 600 is disposed between sealing plate 130 and the main body portion (positive electrode tab groups 250, 280 are not included) of electrode assembly 200. Spacer 600 is composed of a resin member having an insulating property. Spacer 600 suppresses movement of electrode assembly 200 in case 100 in the X direction to suppress damages of positive electrode tab groups 250, 280, electrode assembly 200, and the like.

Spacer 600 shown in each of Figs. 11 and 12 is composed of a resin, for example. Examples of the material of spacer 600 includes polypropylene (PP), polyphenylene sulfide (PPS), polybutylene terephthalate (PBT), ethylene-propylene-diene rubber (EPDM), and the like.

As shown in Figs. 11 and 12, insulating sheet 700 (electrode assembly holder) composed of a resin is disposed between electrode assembly 200 and case main body 110. Insulating sheet 700 may be composed of, for example, a resin. More specifically, the material of insulating sheet 700 is, for example, polypropylene (PP), polyethylene terephthalate (PET), polyphenylene sulfide (PPS), polyimide (PI), or polyolefin (PO).

### (Manufacturing Process for Secondary Battery 1)

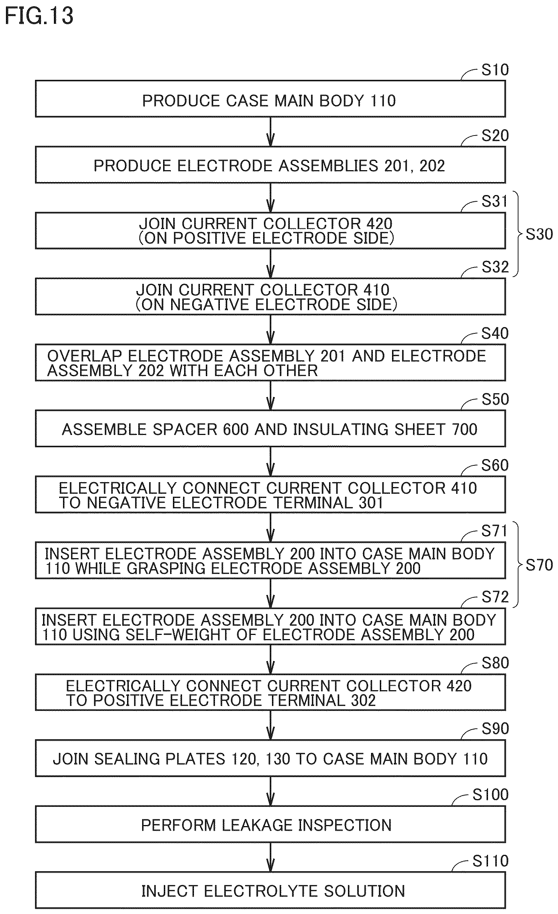

Hereinafter, a method of manufacturing the secondary battery according to the present embodiment will be described with reference to the flowchart of Fig. 13. In the method of manufacturing the secondary battery according to the present embodiment, first, case main body 110 is produced (step S10), and first electrode assembly 201 and second electrode assembly 202 are produced (step S20). Parts of the tips of negative electrode tab group 220, positive electrode tab group 250, negative electrode tab group 270, and positive electrode tab group 280 are preferably cut such that they have the same tip length when bundled. Then, current collectors 410, 420 are joined to first electrode assembly 201 and second electrode assembly 202 (step S30).

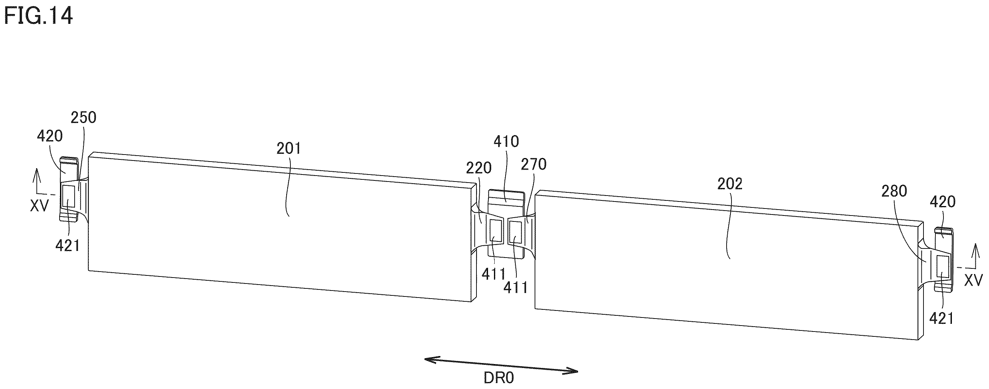

Specifically, as shown in Figs. 14 and 15, after producing first electrode assembly 201 and second electrode assembly 202, each of positive electrode tab groups 250, 280 is joined to current collector 420 (step S31). Each of positive electrode tab groups 250, 280 is joined to current collector 420 at joining location 421.

Next, first electrode assembly 201, current collector 410, and second electrode assembly 202 are disposed side by side in this order in a DR0 direction. Negative electrode tab group 220 is disposed on one side with respect to current collector 410 in the DR0 direction. Negative electrode tab group 220 and negative electrode tab group 270 are joined to current collector 410 with negative electrode tab group 270 being disposed on the other side with respect to current collector 410 in the DR0 direction (step S32). Negative electrode tab group 220 and negative electrode tab group 270 are joined to current collector 410 at joining locations 411.

In the height direction of each of first electrode assembly 201 and second electrode assembly 202, each of current collector 410 and current collector 420 is disposed on one side with respect to the center of each of first electrode assembly 201 and second electrode assembly 202. Thus, each of the current collectors can be formed to be short, thereby reducing the size of the current collector. Each of current collector 410 and current collector 420 is not limited to this configuration. In the height direction of each of first electrode assembly 201 and second electrode assembly 202, each of current collector 410 and current collector 420 may be disposed at the center of a corresponding one of first electrode assembly 201 and second electrode assembly 202.

The order of the steps of joining current collector 410 and current collector 420 to first electrode assembly 201 and second electrode assembly 202 is not limited to the one described above, and the order may be changed. The step of joining current collector 420 to each of first electrode assembly 201 and second electrode assembly 202 is preferably performed before the below-described step of overlapping first electrode assembly 201 and second electrode assembly 202 with each other, and is preferably performed before the step of joining current collector 410 to first electrode assembly 201 and second electrode assembly 202.

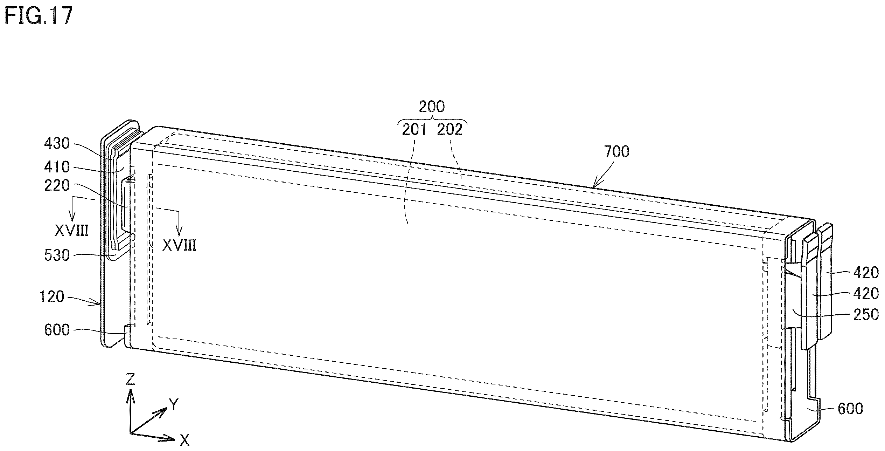

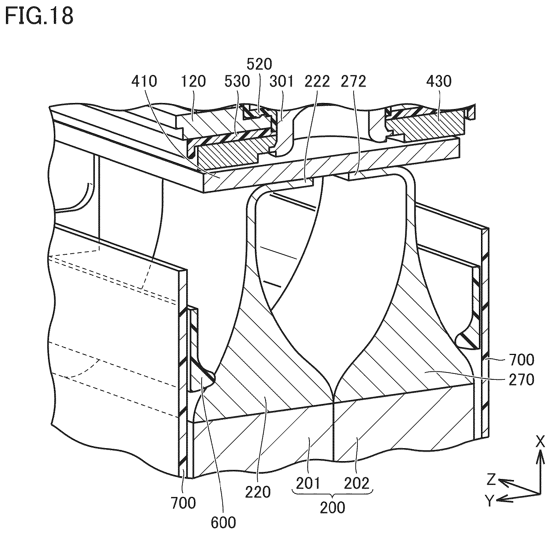

Next, after joining negative electrode tab group 220 and negative electrode tab group 270 to current collector 410, negative electrode tab group 220 and negative electrode tab group 270 are bent in the thickness direction (direction orthogonal to the DR0 direction in Figs. 17 and 18) of each of first electrode assembly 201 and second electrode assembly 202, thereby overlapping first electrode assembly 201 and second electrode assembly 202 with each other (step S40). That is, first electrode assembly 201 and second electrode assembly 202 are collected together.

Regarding the expression "overlapping the first electrode assembly and the second electrode assembly with each other", the first electrode assembly and the second electrode assembly may be overlapped with each other directly, or another member may be disposed between the first electrode assembly and the second electrode assembly. The first electrode assembly and the second electrode assembly may or may not be fixed by a tape or the like. Further, the first electrode assembly, the current collector, and the second electrode assembly may not be disposed on a straight line in the DR0 direction, and the first electrode assembly or the second electrode assembly may be inclined with respect to the current collector in the DR0 direction.

Negative electrode tab group 220 and negative electrode tab group 270 are bent such that the tip portions thereof face each other. Positive electrode tab group 250 and positive electrode tab group 280 are also bent such that the tip portions thereof face each other.

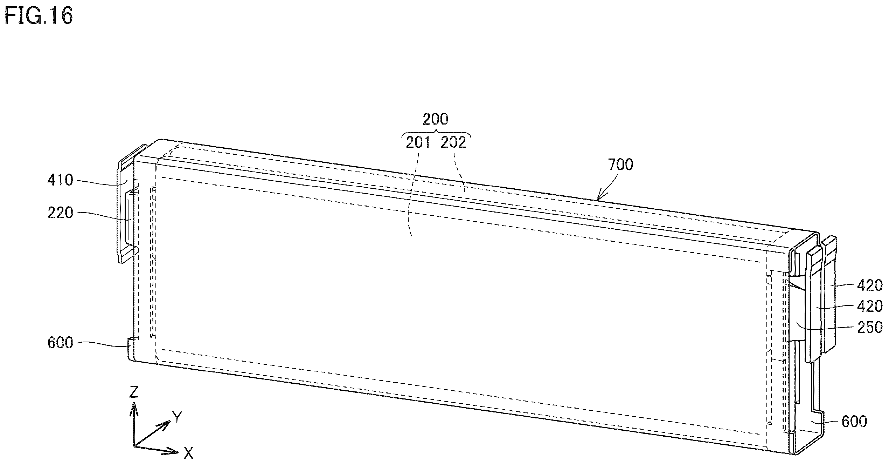

Next, as shown in Fig. 16, spacers 600 and insulating sheet 700 are assembled to electrode assembly 200 (step S50). After spacers 600 are assembled to electrode assembly 200 on the negative electrode side and the positive electrode side, electrode assembly 200 and spacers 600 on the both sides are covered with insulating sheet 700. Thus, electrode assembly 200 and spacers 600 on the both sides are covered with insulating sheet 700 with spacers 600 being disposed on the both sides with respect to electrode assembly 200. Insulating sheet 700 is joined or fixed to spacers 600 on the both sides.

Next, as shown in Figs. 17 and 18, current collector 410 is electrically connected to negative electrode terminal 301 with current collector 430 being interposed therebetween (step S60). Step S60 can be performed before step S50. Specifically, as shown in Fig. 18, negative electrode tab group 220 and negative electrode tab group 270 are bent such that tip portions 222, 272 face each other.

Each of negative electrode terminal 301 and current collector 430 is attached to sealing plate 120 with an insulating member being interposed therebetween. Current collector 430 is brought into abutment with current collector 410 in the X direction. The connecting of plate-shaped member 303 to negative electrode terminal 301 may be performed at any timing. Current collector 430 and current collector 410 are joined to each other by laser welding from between sealing plate 120 and insulating sheet 700.

Next, spacer 600 and electrode assembly 200 are inserted into case main body 110 via opening 113 with the current collector 420 side being inserted first (step S70). On this occasion, in the first stage, electrode assembly 200 is inserted into case main body 110 while grasping electrode assembly 200 (step S71), and in the second stage subsequent thereto, electrode assembly 200 is moved vertically downward using gravity so as to insert electrode assembly 200 into case main body 110 (step S72). In the present embodiment, after insulating member 460 is attached to two current collectors 420, electrode assembly 200 is inserted into case main body 110. In this way, electrode assembly 200 can be inserted into case main body 110 in a state in which two current collectors 420 are collected into one.

After electrode assembly 200 is inserted into case main body 110, negative electrode tab group 220 and negative electrode tab group 270 are curved by bringing sealing plate 120 close to the main body portion of electrode assembly 200 (first electrode assembly 201 and second electrode assembly 202) from the state in which negative electrode tab group 220 and negative electrode tab group 270 are extended (state shown in Fig. 11). Negative electrode tab group 220 and negative electrode tab group 270 are curved along the shape of spacer 600 such that the folded portions of curved portions 221, 271 are close to case main body 110 in the Y direction.

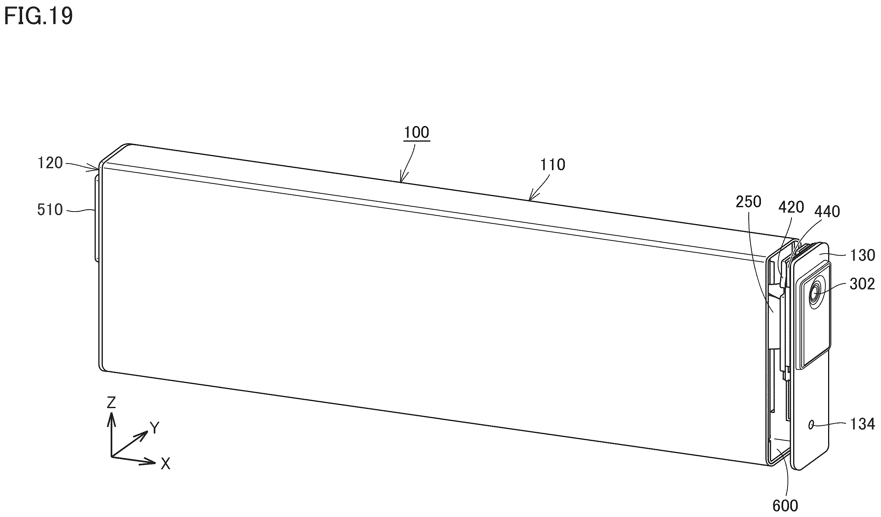

As shown in Fig. 19, after bringing sealing plate 120 into abutment with case main body 110, sealing plate 120 is temporarily joined to case main body 110. By the temporary joining, sealing plate 120 is partially joined to opening 113 of case main body 110. Thus, sealing plate 120 is positioned with respect to case main body 110.

After electrode assembly 200 is inserted into case main body 110, current collector 420 is electrically connected to positive electrode terminal 302 (step S80). Specifically, positive electrode terminal 302 is attached to sealing plate 130 with an insulating member being interposed therebetween. After inserting first electrode assembly 201 and second electrode assembly 202 into case main body 110, current collector 440 is brought into abutment, in the X direction, with current collector 420 protruding from opening 114. The connecting of plate-shaped member 304 to positive electrode terminal 302 may be performed at any timing.

Positive electrode tab group 250 and positive electrode tab group 280 connected to current collector 420 are folded such that tip portions 252, 282 face each other. As shown in Fig. 12, positive electrode tab group 250 and positive electrode tab group 280 are curved along the shape of spacer 600 such that the folded portions of curved portions 251, 281 are close to case main body 110 in the Y direction.

After spacer 600 and electrode assembly 200 are inserted into case main body 110, sealing plate 130 and sealing plate 120 are joined to case main body 110 (step S90).

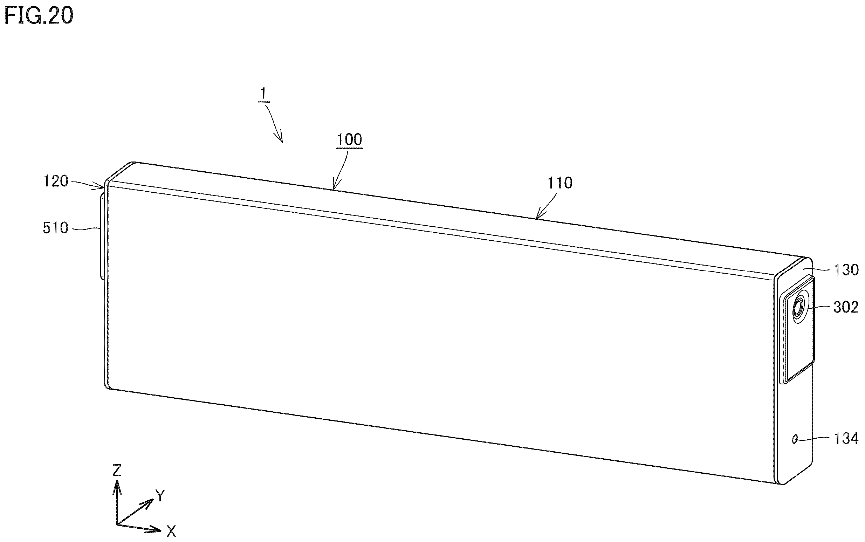

As shown in Fig. 20, after sealing plate 130 is brought into abutment with case main body 110, sealing plate 130 is temporarily welded to case main body 110. By the temporary joining, sealing plate 130 is partially joined to opening 114 of case main body 110. Thus, sealing plate 130 is positioned with respect to case main body 110.

Next, sealing plate 120 and sealing plate 130 are joined to case main body 110. Sealing plate 120 seals opening 113 of case main body 110, and sealing plate 130 seals opening 114 of case main body 110. Thus, first electrode assembly 201 and second electrode assembly 202 are accommodated in case 100.

After the above-described steps, an inspection such as a leakage inspection is performed (step S100). After the leakage inspection, secondary battery 1 is dried to remove moisture in case 100.

Next, the electrolyte solution is injected into case 100 via injection hole 134 provided in sealing plate 130 in a state in which sealing plate 130 is disposed on the upper side with respect to sealing plate 120 and spacer 600 is disposed on the lower side with respect to electrode assembly 200 in the vertical direction (step S110). Since spacer 600 is provided around the portion via which the electrolyte solution is injected, electrode assembly 200 or the like is suppressed from being damaged even when the electrolyte solution is vigorously injected into case 100. Thus, in secondary battery 1 according to the present embodiment, the electrolyte solution can be injected in a shorter period of time than that in a case where spacer 600 is not provided. Thereafter, charging is performed to result in release of gas. For performing the charging to result in release of gas, injection hole 134 may be temporarily sealed. Thereafter, injection hole 134 is sealed, thereby completing secondary battery 1.

### (Step of Inserting Electrode Assembly 200)

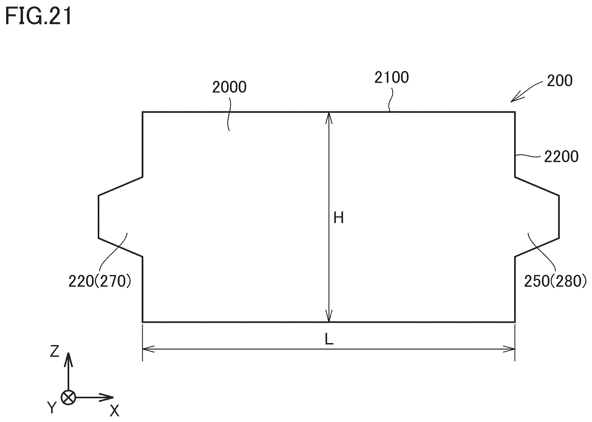

As shown in Fig. 21, electrode assembly 200 has a main body portion 2000 (substantially rectangular portion except for negative electrode tab groups 220, 270 and positive electrode tab groups 250, 280) having a substantially rectangular shape including a long side 2100 and a short side 2200 when viewed in the Y direction (first direction). Long side 2100 extends in the Y direction and short side 2200 extends in the Z direction. Long side 2100 has a length L (first length) and short side 2200 has a length H (second length). Length L of long side 2100 is preferably about three times or more as large as length H of short side 2200 (as an example, L = about 308 mm and H = about 90 mm). Length L of long side 2100 is preferably about 300 mm or more. However, the dimensions of main body portion 2000 of electrode assembly 200 are not limited to those described above.

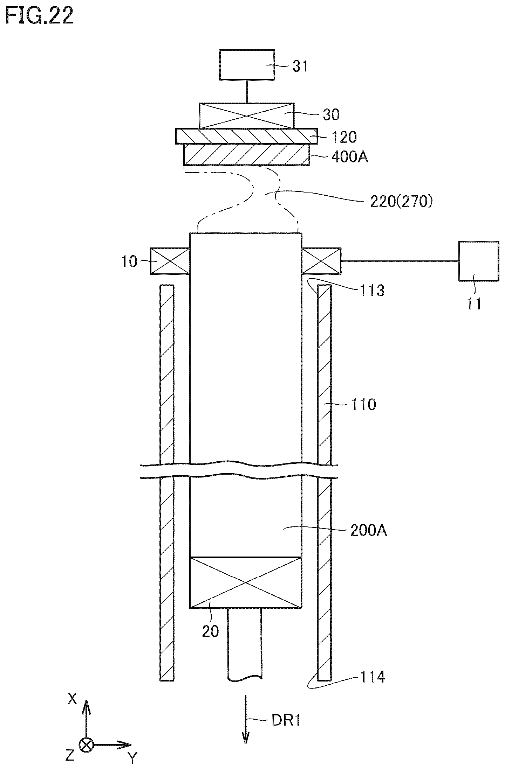

As shown in Fig. 22, in the step of inserting electrode assembly 200, an insertion jig including a first jig 10 (first grasping means), a second jig 20 (elastic jig), and a third jig 30 (second grasping means) is used. Electrode assembly 200 is inserted into case main body 110 along a direction of arrow DR1. In the present embodiment, electrode assembly 200 is disposed such that the direction of long side 2100 of electrode assembly 200 is oriented in the vertical direction and case main body 110 and electrode assembly 200 are disposed such that the direction of arrow DR1 is oriented vertically downward.

First jig 10 grasps (for example, sandwiches in the Y direction) a stack 200A including electrode assembly 200. First jig 10 can be attached to, for example, a robot arm and therefore can be operated in the vertical direction while grasping stack 200A. Stack 200A grasped by first jig 10 is inserted into case main body 110 through opening 113 (first opening).

Second jig 20 is inserted into case main body 110 through opening 114 (second opening) provided opposite to opening 113. After stack 200A inserted into case main body 110 through opening 113 reaches second jig 20, second jig 20 can be moved vertically downward (in the direction of arrow DR1) while supporting stack 200A.

After stack 200A grasped by first jig 10 is moved (lowered) to a position at which stack 200A is to be supported by second jig 20, the operations of first jig 10 and second jig 20 in the vertical direction are synchronized with each other. Thus, it is possible to suppress an unintended load (load from second jig 20) from being exerted on electrode assembly 200 to be inserted into case main body 110. Thereafter, by releasing the grasping of stack 200A (electrode assembly 200) by first jig 10, stack 200A (electrode assembly 200) is supported from below by second jig 20.

Third jig 30 grasps (for example, suctions in the Z direction) sealing plate 120 to which negative electrode current collector 400A is attached. Third jig 30 is attached to the same robot arm as the robot arm to which first jig 10 is attached. However, first jig 10 and third jig 30 may be attached to different robot arms.

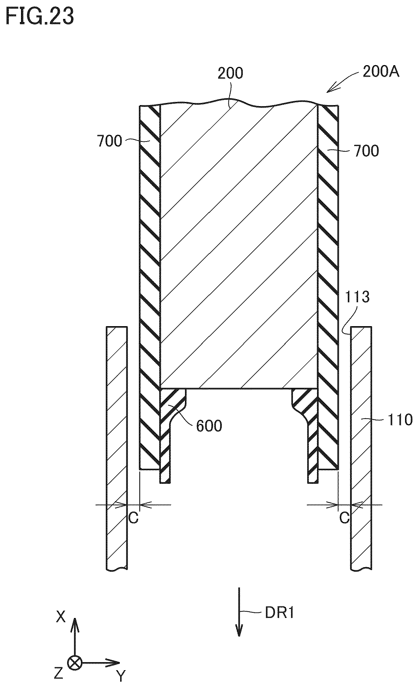

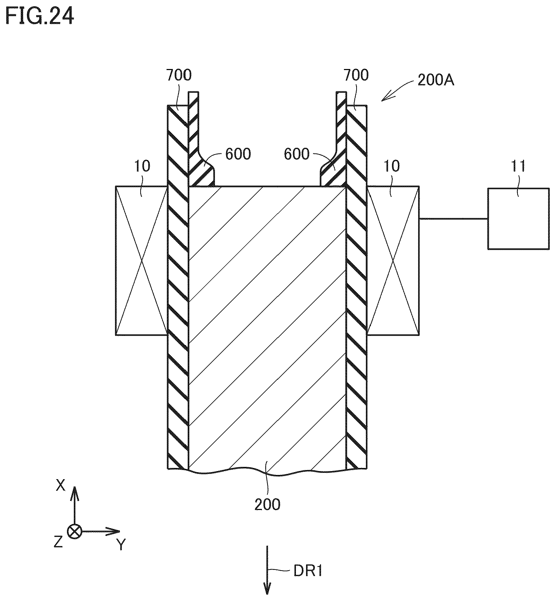

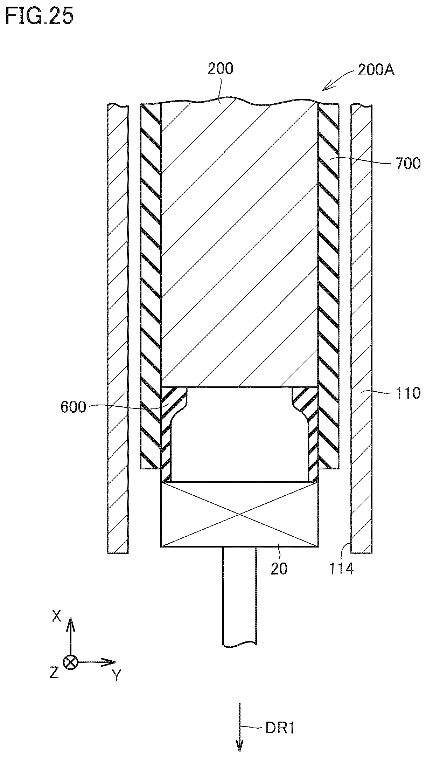

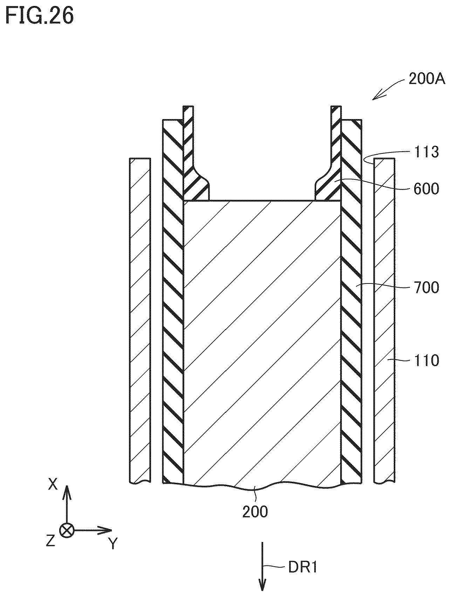

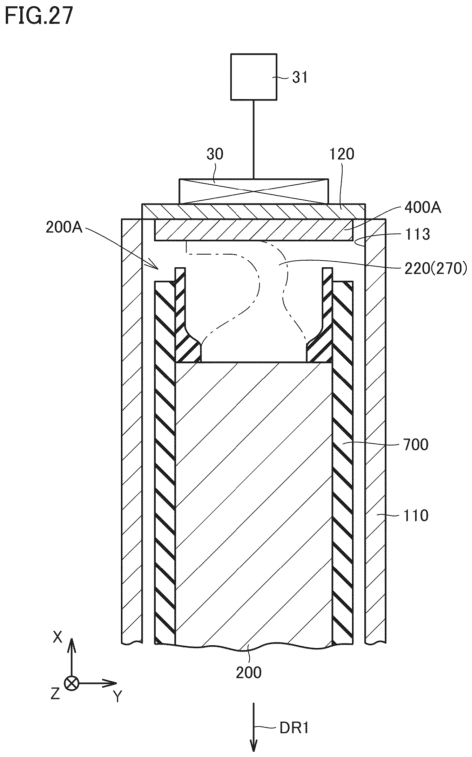

As shown in Figs. 22 to 27, the step of inserting electrode assembly 200 (stack 200A) includes: a first stage (Figs. 23 and 24) of inserting a portion of electrode assembly 200 (stack 200A) in the X direction (the direction of the long side) into case main body 110 while grasping stack 200A by first jig 10; and a second stage (Figs. 25 and 26) of inserting a remainder of electrode assembly 200 (stack 200A) in the X direction into case main body 110 after the first stage. Thereafter, opening 113 of case main body 110 is sealed by sealing plate 120 (Fig. 27).

It should be noted that although not explicitly shown in Figs. 23 to 26 for convenience of illustration, the step of inserting electrode assembly 200 into case main body 110 is performed in a state in which electrode assembly 200 and sealing plate 120 are connected to each other via negative electrode tab groups 220, 270 and current collectors 410, 430 and electrode assembly 200 and negative electrode terminal 301 are electrically connected to each other (see Figs. 17 and 18).

Stack 200A includes: spacer 600 provided at the end portion of electrode assembly 200 in the X direction; and insulating sheet 700 (sheet member) covering electrode assembly 200. Electrode assembly 200 is inserted into case main body 110 together with spacer 600 and insulating sheet 700. Spacer 600 and insulating sheet 700 can be joined or fixed to each other by, for example, welding or the like.

However, stack 200A may not necessarily include spacer 600 and insulating sheet 700. Moreover, spacer 600 and insulating sheet 700 may not necessarily be joined or fixed to each other. Insulating sheet 700 does not necessarily need to cover the whole of electrode assembly 200, and may cover a portion of electrode assembly 200.

Referring to Figs. 23 and 24, in the first stage of the step of inserting electrode assembly 200, a portion of electrode assembly 200 corresponding to a length of about 2/3 or more (preferably about 3/4 or more, more preferably about 4/5 or more, and further preferably about 5/6 or more) of length L of main body portion 2000 is inserted into case main body 110 in a state in which stack 200A is grasped by first jig 10.

As shown in Fig. 23, in the step of inserting electrode assembly 200, first jig 10 inserts stack 200A (electrode assembly 200) into case main body 110 while grasping (sandwiching) stack 200A (electrode assembly 200). Here, a clearance is provided between stack 200A (insulating sheet 700) and the inner surface of case main body 110. In a state in which the center of stack 200A and the center of each of openings 113 and 114 coincide with each other when viewed in the insertion direction, the width (C) of the clearance is preferably about more than 0 and 0.6 mm or less. More specifically, the clearance between the inner surface of first side surface portion 111, which is the long side surface, and insulating sheet 700 is preferably about 0.15 mm or less, and the clearance between the inner surface of second side surface portion 112, which is the short side surface, and insulating sheet 700 is preferably about 0.53 mm or less.

First jig 10 has a control unit 11. In the first stage of the step of inserting electrode assembly 200, control unit 11 can perform control of a position or direction of stack 200A (electrode assembly 200) based on a magnitude of reaction to stack 200A (electrode assembly 200). More specifically, the control of the position of stack 200A (electrode assembly 200) in the Y axis, the X axis, and the Z axis and the direction of stack 200A (electrode assembly 200) in a rotation direction around the Y axis, the X axis, and the Z axis can be performed based on a magnitude of reaction of force along the direction of each of the Y axis (first axis), the X axis (second axis), and the Z axis (third axis), and a magnitude of reaction of rotational moment around each of the Y axis, the X axis, and the Z axis.

Referring to Figs. 25 and 26, in the second stage of the step of inserting electrode assembly 200, stack 200A (electrode assembly 200) is supported by second jig 20 inserted into case main body 110 through opening 114, and a remainder of stack 200A (electrode assembly 200) is inserted into case main body 110 by lowering (moving) second jig 20 vertically downward. That is, in the second stage of the insertion step, electrode assembly 200 is inserted into case main body 110 using its self-weight (gravity). On this occasion, electrode assembly 200 is not grasped by first jig 10.

Second jig 20 is in abutment with spacer 600 so as to support stack 200A (electrode assembly 200) from below. Second jig 20 preferably includes an elastic material (elastic material having an elastic modulus of about 7.0 GPa or more and 11.0 GPa or less) such as UNILATE (registered trademark) PC. Since second jig 20 includes the elastic material, in the second stage of the insertion of electrode assembly 200, the self-weight of stack 200A (electrode assembly 200) is absorbed, with the result that an unintended load can be suppressed from being exerted on electrode assembly 200.

In the second stage of the step of inserting electrode assembly 200, the remainder of electrode assembly 200 that has not been inserted in the first stage is inserted. Preferably, a portion thereof corresponding to a length of about 1/5 or more (more preferably, about 1/4 or more) of length L of main body portion 2000 is inserted into case main body 110 in a state in which stack 200A is supported by second jig 20 from below and is not grasped by first jig 10. As an example, for example, an amount of movement (stroke) in the whole of the step of inserting electrode assembly 200 with the first stage and the second stage being combined is about 340 mm, and an amount of movement in the second stage is about 90 mm.

Referring to Fig. 27, in the step of sealing opening 113 by sealing plate 120, third jig 30 fits sealing plate 120 into opening 113 of case main body 110 while grasping (suctioning) sealing plate 120. Thus, opening 113 is sealed. Here, in a state in which the center of sealing plate 120 and the center of opening 113 coincide with each other when viewed in the insertion direction, a clearance between sealing plate 120 and case main body 110 is preferably about more than 0 and 0.1 mm or less.

Third jig 30 has a control unit 31. Control unit 31 can perform control of a position or direction of sealing plate 120 based on a magnitude of reaction to sealing plate 120. More specifically, the control of the position of sealing plate 120 in the Y axis, the X axis, and the Z axis and the direction of sealing plate 120 in the rotation direction around the Y axis, the X axis, and the Z axis can be performed based on a magnitude of reaction of force along the direction of each of the Y axis (first axis), the X axis (second axis), and the Z axis (third axis), and a magnitude of reaction of rotational moment around each of the Y axis, the X axis, and the Z axis.

According to the method of manufacturing the secondary battery in the present embodiment, in the step (first stage) of inserting stack 200A (electrode assembly 200) into case main body 110 while grasping stack 200A (electrode assembly 200) by first jig 10, control unit 11 is used to perform the control of the position or direction of stack 200A (electrode assembly 200), with the result that when inserting stack 200A (electrode assembly 200) into case main body 110, the center positions or rotation directions thereof can be accurately matched with each other and the control of the clearance can be performed precisely. As a result, resistance in inserting electrode assembly 200 is reduced, with the result that unintended sag (wrinkling) or bending of insulating sheet 700 can be suppressed and occurrence of deviation between the electrode plates (negative electrode plate 210 and positive electrode plate 240) can be suppressed.

According to the method of manufacturing the secondary battery in the present embodiment, in the step (second stage) of inserting case main body 110 in the state in which electrode assembly 200 is not grasped by first jig 10, the insertion of stack 200A (electrode assembly 200) using its self-weight (gravity) is performed, with the result that electrode assembly 200 does not need to be pushed from above (rear side in the insertion direction), occurrence of unintended sag (wrinkling) or bending of insulating sheet 700 can be suppressed, and occurrence of deviation between the electrode plates (negative electrode plate 210 and positive electrode plate 240) can be suppressed.

According to the method of manufacturing the secondary battery in the present embodiment, in the step of pushing sealing plate 120 by third jig 30, control unit 31 is used to perform the control of the position or direction of sealing plate 120, with the result that when fitting sealing plate 120 into opening 113, the center positions or the rotation directions thereof can be accurately matched with each other and the control of the clearance can be performed precisely. As a result, resistance in fitting can be suppressed from being increased. Moreover, it is possible to suppress generation of a foreign matter due to contact between case main body 110 and sealing plate 120, and suppress the foreign matter from being introduced into case main body 110.

Thus, according to the present embodiment, it is possible to suppress an unintended influence on electrode assembly 200, and to suppress the foreign matter from being introduced into case main body 110.

In the present embodiment, it has been illustratively described that the control of the position or direction of stack 200A (electrode assembly 200) and the control of the position or direction of sealing plate 120 are performed in the step of inserting electrode assembly 200 and the step of sealing opening 113; however, the scope of the present technology is not limited thereto, and one or both of the control by control unit 11 and the control by control unit 31 may not be performed.

In the present embodiment, it has been illustratively described that the insertion direction of electrode assembly 200 is oriented vertically downward throughout the first stage and the second stage of the step of inserting electrode assembly 200; however, the scope of the present technology is not limited thereto, and case main body 110 and electrode assembly 200 may be disposed such that the insertion direction of electrode assembly 200 is oriented vertically downward at least in the second stage.

Although the embodiments of the present invention have been described and illustrated in detail, it is clearly understood that the same is by way of illustration and example only and is not to be taken by way of limitation. The scope of the present invention is defined by the terms of the claims, and is intended to include any modifications within the scope and meaning equivalent to the terms of the claims.

## Claims

1. A method of manufacturing a secondary battery, the method comprising:
preparing an exterior container (100) having a prismatic shape and provided with a first opening (113);
preparing an electrode assembly (200) including a positive electrode (240) and a negative electrode (210) stacked in a first direction, the electrode assembly (200) having a main body portion (2000) having a substantially rectangular shape including a long side (2100) and a short side (2200) when viewed in a first direction; and
inserting the electrode assembly (200) into the exterior container (100) through the first opening (113) along a direction of the long side (2100), wherein
the inserting the electrode assembly (200) into the exterior container (100) includes
a first stage of inserting, into the exterior container (100), a portion of the electrode assembly (200) corresponding to a length of 2/3 or more of the main body portion (2000) in the direction of the long side (2100) while grasping the electrode assembly (200), and
a second stage of inserting, into the exterior container (100), a remainder of the electrode assembly (200) in the direction of the long side (2100) after the first stage, and
at least in the second stage, the exterior container (100) and the electrode assembly (200) are disposed such that the direction of the long side (2100) is oriented in a vertical direction and the electrode assembly (200) is inserted vertically downward.

2. The method of manufacturing the secondary battery according to claim 1, wherein
the exterior container (100) is provided with a second opening (114) provided opposite to the first opening (113), and
in the second stage, while supporting the electrode assembly (200) by a jig inserted into the exterior container (100) through the second opening (114), the electrode assembly (200) is inserted into the exterior container (100) by moving the jig vertically downward.

3. The method of manufacturing the secondary battery according to claim 1 or 2, wherein the long side (2100) has a first length, the short side (2200) has a second length, and the first length is three times or more as large as the second length.

4. The method of manufacturing the secondary battery according to any one of claims 1 to 3, wherein a length of the long side (2100) is 300 mm or more.

5. The method of manufacturing the secondary battery according to any one of claims 1 to 4, further comprising providing a spacer (600) having an insulating property at an end portion of the electrode assembly (200) in the direction of the long side (2100), wherein
the electrode assembly (200) is inserted into the exterior container (100) together with the spacer (600).

6. The method of manufacturing the secondary battery according to claim 5, further comprising:
providing a sheet member (700) having an insulating property and covering at least a portion of the electrode assembly (200); and
joining the sheet member (700) and the spacer (600).

7. The method of manufacturing the secondary battery according to any one of claims 1 to 5, further comprising providing a sheet member (700) having an insulating property and covering at least a portion of the electrode assembly (200), wherein
the electrode assembly (200) is inserted into the exterior container (100) together with the sheet member (700).

8. The method of manufacturing the secondary battery according to claim 7, wherein in the inserting the electrode assembly (200) into the exterior container (100), a clearance between the sheet member (700) and the exterior container (100) is more than 0 and 0.6 mm or less.

9. The method of manufacturing the secondary battery according to any one of claims 1 to 8, further comprising sealing the first opening (113) by a sealing plate (120).

10. The method of manufacturing the secondary battery according to claim 9, wherein in the sealing the first opening (113), control of a position or direction of the sealing plate (120) based on a magnitude of reaction to the sealing plate (120) is performed.

11. The method of manufacturing the secondary battery according to claim 9 or 10, wherein in the sealing the first opening (113), a clearance between the sealing plate (120) and the exterior container (100) is more than 0 and 0.1 mm or less.
